# EUROPÄISCHE PATENTANMELDUNG

(11) **EP 4 309 878 A1**
(43) Veröffentlichungstag der Anmeldung: **24.01.2024**
(21) Anmeldenummer: 22186215.4
(22) Anmeldetag: 21.07.2022
(51) Int. Cl.: B29C 64/35, B29C 64/112, B29C 64/209, B33Y 40/00

(54) **VERFAHREN ZUM REINIGEN EINES DRUCKKOPFES**

(71) Anmelder: Ivoclar Vivadent AG, 9494 Schaan (LI)
(72) Erfinder: REINHARDT, Jonas, 7206 Igis (CH); BITAR, Nicola, 9462 Montlingen (CH); NIEDRIG, Christian, 9478 Azmoos (CH)
(74) Vertreter: Baldus, Oliver

(57) **Zusammenfassung**

Die vorliegende Erfindung betrifft ein Verfahren zum Entfernen von Ablagerungen in einem Druckkopf eines 3D-Druckers, mit den Schritten eines Zuführens (S101) einer Flüssigkeit, die einen granularen Feststoff umfasst, zu dem Druckkopf; und eines Versetzens (S102) der Flüssigkeit in dem Druckkopf in Schwingungen.

## Beschreibung

Die vorliegende Erfindung betrifft ein Verfahren zum Entfernen von Ablagerungen in einem Druckkopf und einen 3D-Drucker mit einem Druckkopf.

Beim Drucken von Tinten mit einer Düse entstehen immer wieder Ablagerungen und Verstopfungen im Druckkopf. Diese werden momentan mit speziellen Reinigungsmitteln, durch Spülen mit Tinte oder Reinigungsmittel oder durch starkes Herausspritzen von Tinte aus der Düse entfernt. Bei der Reinigung mit Reinigungsmittel wird das gesamte Fluidsystem mit dem Reinigungsmittel befüllt. Dazu wird der Druckkopf vom Flüssigkeitssystem getrennt, um das Reinigungsmittel einzubringen. Reinigungsmittel können aber starke Verstopfungen nicht beseitigen.

Es ist die technische Aufgabe der vorliegenden Erfindung, Ablagerungen in einem Druckkopf effizient zu entfernen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Entfernen von Ablagerungen in einem Druckkopf eines 3D-Druckers gelöst, mit den Schritten eines Zuführens einer Flüssigkeit, die einen granularen Feststoff umfasst, zu dem Druckkopf; und eines Versetzens der Flüssigkeit in dem Druckkopf in Schwingungen. Die granularen Feststoffe, die in Schwingung gesetzt werden, erzeugen einen Gleitschleifeffekt (Trowalisierungseffekt), mit dem Ablagerungen innerhalb des Druckkopfes entfernt werden können. Mit diesem Effekt können alle Ablagerungen oder Verstopfungen im Fluidsystem des Druckkopfes gelöst werden. Da die Feststoffkörper mit ihrer Bewegung einen Scheuereffekt an den Seitenwänden erzeugen, können Ablagerungen in den Fluidkanälen und an den Düsen gelöst und entfernt werden. Verschmutzungen und Ablagerungen, die bis jetzt nicht zu entfernen waren, können effektiv und kostengünstig entfernt werden. Dadurch kann mit einer hohen Qualität gedruckt und Ausfälle von einzelnen Düsen können verhindert werden.

In einer technisch vorteilhaften Ausführungsform des Verfahrens umfasst der granulare Feststoff Zirkondioxidpartikel und/oder Siliziumdioxidpartikel. Die Flüssigkeit kann einen Feststoffanteil von über 20% aufweisen. Dadurch wird beispielsweise der technische Vorteil erreicht, dass die Ablagerungen effizient beseitigt werden können.

In einer weiteren technisch vorteilhaften Ausführungsform des Verfahrens weisen die Partikel in dem granularen Feststoff eine maximale Größe von einem halben Durchmesser einer Austrittsdüse in dem Druckkopf auf. Dadurch wird beispielsweise der technische Vorteil erreicht, dass eine gute Reinigungswirkung erzielt wird.

In einer weiteren technisch vorteilhaften Ausführungsform des Verfahrens ist der granulare Feststoff in einer Druckflüssigkeit angeordnet. Dadurch wird beispielsweise der technische Vorteil erreicht, dass auf eine separate Zuführung des granularen Feststoffes oder die Zuführung einer Reinigungsflüssigkeit verzichtet werden kann. In diesem Fall ist die Druckflüssigkeit zugleich Reinigungsmittel.

In einer weiteren technisch vorteilhaften Ausführungsform des Verfahrens wird eine Austrittsdüse des Druckkopfes verschlossen, während die Flüssigkeit in dem Druckkopf in Schwingungen versetzt wird. Dadurch wird beispielsweise der technische Vorteil erreicht, dass die Reinigungswirkung verbessert wird und ein Austreten der Flüssigkeit verhindert wird.

In einer weiteren technisch vorteilhaften Ausführungsform des Verfahrens wird die Austrittsdüse verschlossen, indem der Druckkopf vor eine Verschlusseinrichtung verfahren wird. Dadurch wird beispielsweise der technische Vorteil erreicht, dass der Druckkopf auf einfache Weise verschlossen werden kann.

In einer weiteren technisch vorteilhaften Ausführungsform des Verfahrens wird die Flüssigkeit durch Piezoelemente im Druckkopf, durch Einkoppeln von Ultraschallwellen und/oder durch eine Schwingankerpumpe in Schwingungen versetzt. Das Einkoppeln von Ultraschallwellen kann durch ein Koppeln eines externen Ultraschallerzeuger in das Fluidsystem erreicht werden. Dadurch wird beispielsweise der technische Vorteil erreicht, dass sich die Flüssigkeit mit einfachen Mitteln in Schwingungen versetzen lässt.

In einer weiteren technisch vorteilhaften Ausführungsform des Verfahrens wird die Flüssigkeit mit ihrer Eigenfrequenz im Druckkopf in Schwingungen versetzt. Die Eigenfrequenz der Flüssigkeit entsteht im zur Verfügung stehenden Volumen des Druckkopfes. Dadurch wird beispielsweise der technische Vorteil erreicht, dass die Flüssigkeit mit einer hohen Amplitude und einem geringen Energieaufwand in Schwingungen versetzt werden kann.

In einer weiteren technisch vorteilhaften Ausführungsform des Verfahrens wird die Flüssigkeit mit einer Frequenz zwischen 100 Hz und 150 kHz in Schwingungen versetzt. Dadurch wird beispielsweise der technische Vorteil erreicht, dass sich in dem genannten Frequenzbereich eine besonders gute Reinigungswirkung erzielen lässt.

In einer weiteren technisch vorteilhaften Ausführungsform des Verfahrens wird die Flüssigkeit über einen vorgegebenen Zeitraum in Schwingungen versetzt. Dadurch wird beispielsweise der technische Vorteil erreicht, dass eine kontinuierliche Reinigung stattfindet. Die Reinigung kann beispielsweise im Stand-by-Betrieb durchgeführt werden. Dadurch kann sichergestellt werden, dass der Druckkopf bei der nächsten Verwendung in gereinigtem Zustand bereitgestellt wird. Die zeit zwischen zwei Druckaufträgen kann dann für die Wartung des Druckkopfes verwendet werden.

Gemäß einem zweiten Aspekt wird die technische Aufgabe durch einen 3D-Drucker mit einem Druckkopf gelöst, mit einer Zuführeinrichtung zum Zuführen einer Flüssigkeit, die einen granularen Feststoff umfasst, zu dem Druckkopf; und einer Schwingungserzeugungsvorrichtung zum Versetzen der Flüssigkeit in dem Druckkopf in Schwingungen. Durch den 3D-Drucker werden die gleichen technischen Vorteile wie durch das Verfahren nach dem ersten Aspekt erreicht.

In einer technisch Vorteilhaften Ausführungsform des 3D-Druckers umfasst der 3D-Drucker eine Verschlusseinrichtung zum Verschließen einer Austrittsdüse, während die Flüssigkeit in dem Druckkopf in Schwingungen versetzt wird. Dadurch wird beispielsweise ebenfalls der technische Vorteil erreicht, dass die Reinigungswirkung verbessert wird und ein Austreten der Flüssigkeit verhindert wird. So ist es auch möglich, das Gleitschleifen für eine beliebige Dauer zu betreiben.

In einer weiteren technisch Vorteilhaften Ausführungsform des 3D-Druckers ist die Verschlusseinrichtung durch eine Verschlussplatte gebildet. Dadurch wird beispielsweise der technische Vorteil erreicht, dass der Druckkopf auf einfache Weise und einer hohen Dichtigkeit verschlossen werden kann.

In einer weiteren technisch Vorteilhaften Ausführungsform des 3D-Druckers umfasst der 3D-Drucker ein Piezoelement im Druckkopf, ein Einkopplungselement zum Einkoppeln von Ultraschallwellen und/oder eine Schwingankerpumpe umfasst, um die Flüssigkeit in dem Druckkopf in Schwingungen zu versetzen. Dadurch wird beispielsweise der technische Vorteil erreicht, dass sich die Flüssigkeit mit einfachen Mitteln in Schwingungen versetzen lässt.

In einer weiteren technisch Vorteilhaften Ausführungsform des 3D-Druckers umfasst der 3D-Drucker eine Zeitschaltvorrichtung zum Aktivieren der Schwingungserzeugungsvorrichtung zu einer vorgegebenen Uhrzeit und/oder für eine vorgegebene Dauer. Dadurch wird beispielsweise der technische Vorteil erreicht, dass sich eine zeitgesteuerte Reinigung des Druckkopfes durchführen lässt.

Ausführungsbeispiele der Erfindung sind in den Zeichnungen dargestellt und werden im Folgenden näher beschrieben.

Es zeigen:
- Fig. 1: eine schematische Ansicht eines 3D-Druckers mit einem Druckkopf;
- Fig. 2: eine schematische Ansicht eines Druckkopfes;
- Fig. 3: eine schematische Darstellung eines Gleitschleifeffektes;
- Fig. 4: eine Ansicht einer Austrittsdüse vor und nach dem Reinigen;
- Fig. 5: eine Düsenplatte eines Druckkopfes mit zahlreichen Austrittsdüsen; und
- Fig. 6: ein Blockdiagramm eines Verfahrens zum Entfernen von Ablagerungen in einem Druckkopf.

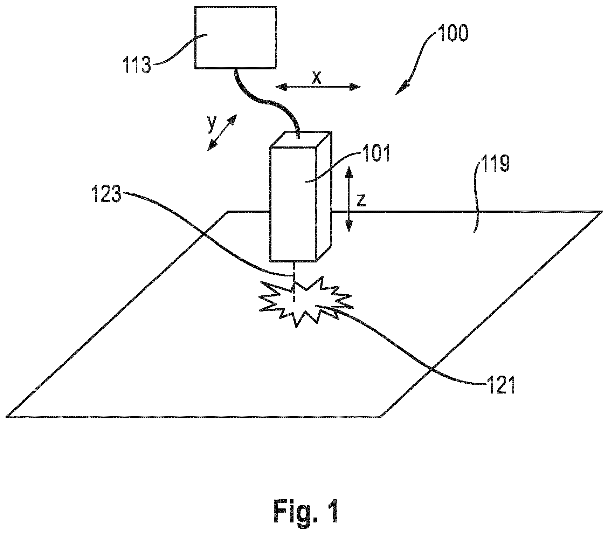

Fig. 1 zeigt eine schematische Ansicht eines 3D-Druckers 100 mit einem Druckkopf 101. Der 3D-Drucker 100 führt einen Freistrahl-Materialauftrag in einem additiven Fertigungsprozess durch. Hierbei wird Rohmaterial in Form von kleinen Tropfen einer Druckflüssigkeit selektiv abgelegt. Beim Poly-Jet oder Multi-Jet Modelling wird ein Modell durch einen Druckkopf 101 mit mehreren linear angeordneten Düsen gefertigt.

Der 3D-Drucker 100 verwendet beispielsweise die Druckflüssigkeit, um eine dentale Restauration 121 auf einer Bauplattform 119 schichtweise aufzubauen. Hierzu wird das Material aus der Druckflüssigkeit mittels eines Druckstrahls 123 aus einer Austrittsdüse punktuell aufgetragen. Der Druckkopf 101 ist in X-Richtung, in Y-Richtung und in Z-Richtung verfahrbar, so dass der Druckstrahl 123 jede Stelle der Bauplattform 119 erreichen kann. Die Druckflüssigkeit wird mittels einer Zuführeinrichtung 113 zu dem Druckkopf 101 zugeführt.

Hierbei entsteht jedoch das Problem, dass im Druckkopf 101 Ablagerungen in Form von Tintenresten, Fremdstoffen oder Sedimenten entstehen können. Diese haften an den Innenseiten des Fluidsystems im Inneren des Druckkopfes 101 an, so dass diese mit der Zeit Verstopfungen verursachen und die Funktion der Austrittsdüsen und des Druckkopfes 101 beinträchtigen.

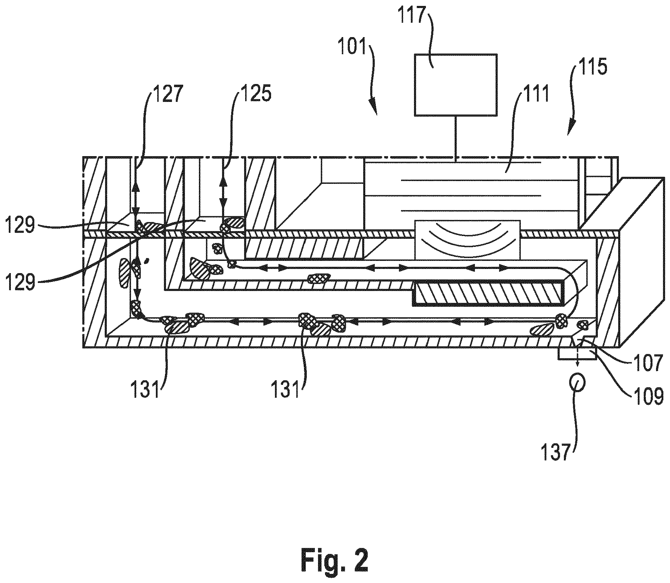

Fig. 2 zeigt eine schematische Ansicht eines Druckkopfes 101. Der Druckkopf 101 umfasst zumindest eine Austrittsdüse 107, aus der der Druckstrahl 123 ausgegeben wird. Dies geschieht über Druckänderungen in der Druckflüssigkeit, die über ein oder mehrere Piezoelement 111 des Druckkopfes 101 erzeugt werden.

Der Druckkopf 101 ist ein Zirkulationsdruckkopf, bei dem die Druckflüssigkeit über einen Zuführkanal 125 zugeführt wird. Diese wird im Inneren des Druckkopfes 101 an der Austrittsdüse 107 vorbeigeführt und teilweise in Form von Tropfen 137 ausgegeben. Der Teil der Druckflüssigkeit, der nicht ausgegeben wird, wird im Inneren des Druckkopfes 101 weitergeleitet und über einen Rückführkanal 127 ausgeben. Im Inneren des Zuführkanals 125 und des Rückführkanals 127 befinden sich die Filter 129, die grobe Verunreinigungen der Druckflüssigkeit am Weiterfließen hindern. Im Allgemeinen kann der Druckkopf 101 des 3D-Druckers 100 auch eine andere Ausführung aufweisen.

Im Laufe der Zeit können sich an den Seitenwänden des Zuführ- oder Rückführkanals 125 und 127 oder der Austrittsdüse 107 Ablagerungen 131 in Form von Schmutz- oder Feststoffpartikeln bilden. Um diese Ablagerungen 131 wieder von den Seitenwänden zu entfernen, wird die Druckflüssigkeit, die einen granularen Feststoff umfasst, zu mechanischen Schwingungen innerhalb des Druckkopfes 101 angeregt. Der granulare Feststoff 105 umfasst beispielsweise kleine Zirkondioxid-Partikel oder Siliziumdioxid-Partikel. Diese weisen beispielsweise eine maximale Größe von einem halben Durchmesser einer Austrittsdüse 107 auf. Im Allgemeinen können die Partikel des granularen Feststoffes 105 eine Größe von 1 nm bis 100 µm aufweisen.

In diesem Fall kann auch die Austrittsdüse 107 mittels des granularen Feststoffs 105 gereinigt werden. Die Reinigungswirkung wird außen an der Düsenplatte, innen an den Austrittsdüsen 107, den Filtern 129 und dem Zuführ- oder Rückführkanal 125 und 127 erreicht. Im Allgemeinen kann das gesamte Fluidsystem des Druckkopfes 101 mittels der Flüssigkeit gereinigt werden.

Durch die schwingenden Feststoffpartikel wird ein Gleitschleifeffekt (Trowalisierungseffekt) durch den scheuernden granularen Feststoff 105 erreicht, mit dem die Ablagerungen 131 im Inneren des Druckkopfes 101 wieder beseitigt werden können. Die Ablagerungen 131 werden durch ein Vibrationsschleifen oder Strömungsschleifen beseitigt. Mit diesem Effekt können alle Ablagerungen 131 oder Verstopfungen im Fluidsystem des Druckkopfes 101 gelöst werden. Da die Feststoffpartikel mit deren Bewegung einen Scheuereffekt an den Seitenwänden erzeugen, können Ablagerungen im Leitungssystem gelöst und entfernt werden.

Die Bewegung oder Schwingung des granularen Feststoffes 105 kann auf verschiedene Art und Weise erzeugt werden, zum Beispiel durch Anregung der Piezoelemente 111 im Druckkopf 101, durch Einkoppeln von Ultraschallwellen oder durch eine Schwingankerpumpe. Der 3D-Drucker 100 kann zu diesem Zweck eine Zeitschaltvorrichtung 117 zum Aktivieren der Schwingungserzeugungsvorrichtung 115 zu einer vorgegebenen Uhrzeit und/oder für eine vorgegebene Dauer umfassen. Die Aktivierung der Schwingungserzeugungsvorrichtung 115 kann beispielsweise kontinuierlich über einen Zeitraum erfolgen, der länger als 5 min ist.

Durch Verschließen der Austrittsdüse 107 mit einer Verschlusseinrichtung 109 in Form einer Verschlussplatte, eines Klebebands oder eines Gummielements kann die Flüssigkeit zu einer maximalen Schwingung innerhalb des Druckkopfes 101 angeregt werden. Beispielsweise kann der Druckkopf 101 auf einer Gummiplatte andocken, so dass alle Austrittsdüsen 107 frontseitig verschlossen sind und keine Druckflüssigkeit austreten kann. Danach werden die Piezoelemente 111 des Druckkopfes 101 als Schwingungserzeugungsvorrichtung 115 verwendet und kontinuierlich über längere Zeit mit der maximalen Leistung angeregt. Dabei entsteht die Scheuerwirkung des in der Flüssigkeit 103 eingebrachten granularen Feststoffes 105.

Die Schwingungen werden beispielsweise in Intervallen mit einer Dauer von 5 - 10 min angeregt. Anschließend kann eine Pause von 30 - 60 min eingelegt werden. Die Dauer für eine Reinigung hängt im Allgemeinen von der Intensität (Amplitude) der Schwingungsbewegung ab. Je höher die Amplitude der Schwingungsbewegung ist, desto geringer ist die Zeit, die für eine Reinigung erforderlich ist.

Auch ist es möglich, den granularen Feststoff 105 einer Druckflüssigkeit beizumischen, so dass die Ablagerungen 131 verhindert werden. Der Druckbetrieb mit einer derartigen Druckflüssigkeit erzeugt einen Scheuereffekt, so dass keine Ablagerungen 131 entstehen können.

So kann zum Beispiel mit diesem Verfahren bei Verwendung von Zirkonschlicker das bestehende Zirkondioxid in der Druckflüssigkeit zum Reinigen des Druckkopfes 101 verwendet werden, indem es über längere Zeit in Bewegung gesetzt wird, so dass ein Scheuereffekt erzeugt wird. Dies hat den technischen Vorteil, dass keine spezielle Reinigungsflüssigkeit benötigt wird und die Reinigung des Fluidsystems des Druckkopfes 101 einfach durchzuführen ist. Die Druckflüssigkeit muss in diesem Fall nicht aufwändig durch eine spezielle Reinigungsflüssigkeit ersetzt werden.

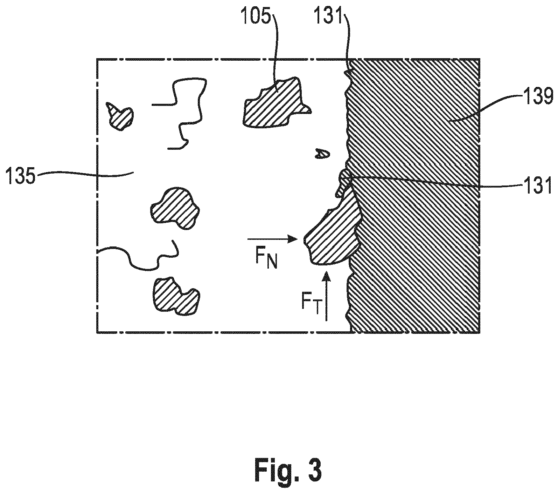

Fig. 3 zeigt eine schematische Ansicht des Gleitschleifeffektes in einem Schlicker 135, auch Tinte oder Slurry genannt. Auf den granularen Feststoff 105 wirkt während der Beaufschlagung mit Schwingungen eine Normalkraft F_{N} und eine Tangentialkraft F_{T}. Durch die Normalkraft F_{N} wird der granularen Feststoff 105 an die Seitenwand 139 gedrückt. Dort entfernt dieser aufgrund der Tangentialkraft F_{T} die Ablagerungen 131.

Wird die Schwingung der Flüssigkeit 103 mit der Resonanzfrequenz des Systems angeregt, wird die größte Amplitude der Schwingung des granularen Feststoffs 105 erreicht. In diesem Fall kann die Flüssigkeit 103 mit einer hohen Amplitude und einem geringen Energieaufwand im Druckkopf 101 in Schwingungen versetzt werden kann. Die Ablagerungen 131 lassen sich dadurch wirksam entfernen. Im Allgemeinen ist die Reinigungswirkung von der Frequenz und Intensität von der Bewegung abhängig.

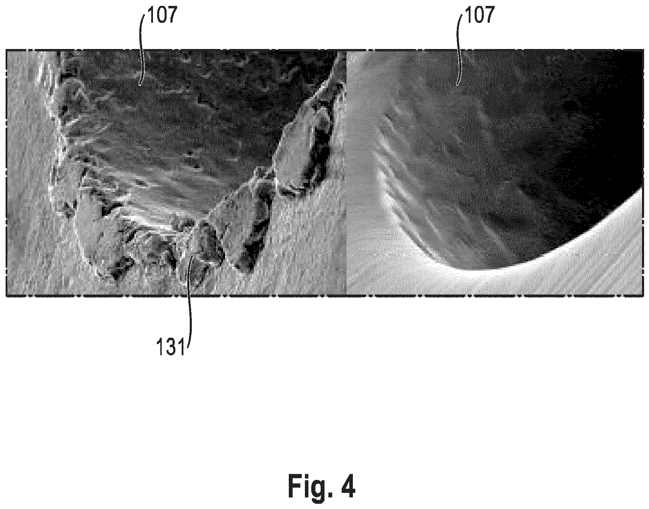

Fig. 4 zeigt eine Ansicht einer Austrittsdüse 107 vor und nach dem Reinigen. Auf der linken Seite ist die Austrittsdüse 107 mit Ablagerungen 131 vor einer Reinigung gezeigt. Auf der rechten Seite ist die Austrittsdüse 107 nach einer Reinigung gezeigt.

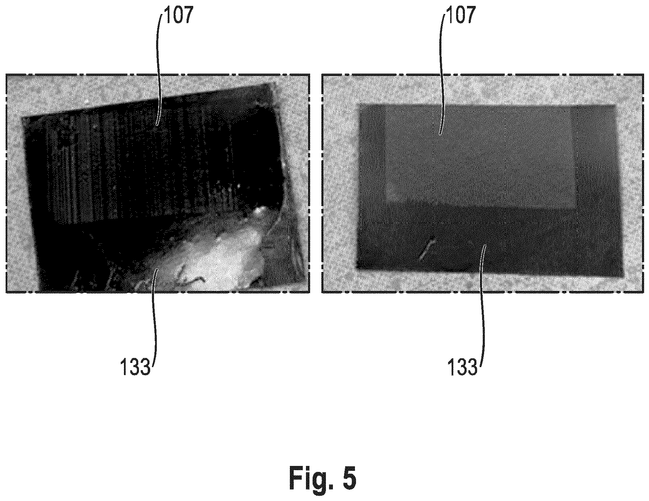

Fig. 5 zeigt eine Düsenplatte 133 eines Druckkopfes 101 mit zahlreichen Austrittsdüsen 107. Auf der linken Seite ist gezeigt, wie vor der Reinigung ca. 50 % der Austrittsdüsen 107 ausgefallen sind. Auf der rechten Seite ist gezeigt, dass nach der Reinigung alle Austrittsdüsen 107 funktionieren.

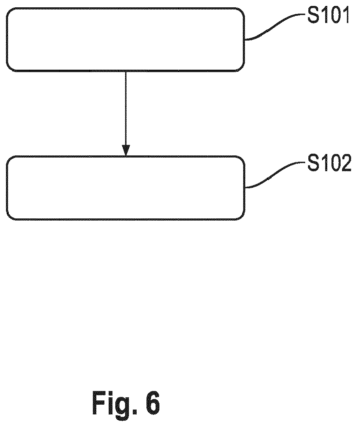

Fig. 6 zeigt ein Blockdiagramm eines Verfahrens zum Entfernen von Ablagerungen 131 in einem Druckkopf 101. Im Schritt S101 wird die Flüssigkeit 103, die einen granularen Feststoff 105 umfasst, zu dem Druckkopf 101 zugeführt. In Schritt S102 wird die Flüssigkeit 103 in dem Druckkopf 101 in mechanische Schwingungen versetzt. Mit diesem Verfahren kann auf einfache Weise die Funktion aller Austrittsdüsen 107 des Druckkopfes 101 erhalten werden. Dies ermöglicht ein Drucken mit einer Qualität, wie diese bei einem neuen Druckkopf gegeben ist. Zudem wird eine übliche Alterung eines Druckkopfes verhindert.

Das Verfahren ermöglicht ein einwandfreies Drucken, bei dem sichergestellt ist, dass alle Austrittsdüsen 107 funktionsfähig sind. Alterungsverluste des Druckkopfes können verhindert werden. Die Reinigung des Druckkopfes 101 ist einfach und spart Zeit, weil die bestehende Druckflüssigkeit zur Reinigung verwendet werden kann. Der Druckkopf braucht zur Reinigung nicht ausgebaut zu werden. Die Innenseite des Flüssigkeitssystems im Druckkopf und die Seitenwände des Leitungssystems werden durch den Gleitschleifeffekt zusätzlich geglättet und poliert, wie dies auch beim Trowalisieren der Fall ist. Bislang hingenommene Druckqualitätsverluste durch Alterung können mit diesem Verfahren verhindert werden.

Durch das Verfahren können hartnäckige Verkrustungen ohne chemischen Prozess entfernt werden und die Zuverlässigkeit des Druckkopfes gesteigert werden, so dass eine einwandfreie Funktion aller Austrittsdüsen gewährleistet ist. Durch das Verfahren kann auch das ganze Durchlaufsystem oder Zirkulationssystem von Ablagerungen befreit werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: 3D-Druckers
- 101: Druckkopf
- 103: Flüssigkeit
- 105: Feststoff
- 107: Austrittsdüse
- 109: Verschlusseinrichtung
- 111: Piezoelement
- 113: Zuführeinrichtung
- 115: Schwingungserzeugungsvorrichtung
- 117: Zeitschaltvorrichtung
- 119: Bauplattform
- 121: Dentale Restauration
- 123: Druckstrahl
- 125: Zuführkanal
- 127: Rückführkanal
- 129: Filter
- 131: Ablagerungen
- 133: Düsenplatte
- 135: Schlicker
- 137: Tropfen
- 139: Seitenwand

## Patentansprüche

1. Verfahren zum Entfernen von Ablagerungen (131) in einem Druckkopf (101) eines 3D-Druckers (100), mit den Schritten:
- Zuführen (S101) einer Flüssigkeit (103), die einen granularen Feststoff (105) umfasst, zu dem Druckkopf (101); und
- Versetzen (S102) der Flüssigkeit (103) in dem Druckkopf (101) in Schwingungen.

2. Verfahren nach Anspruch 1, wobei der granulare Feststoff (105) Zirkondioxidpartikel und/oder Siliziumdioxidpartikel umfasst.

3. Verfahren nach einem der vorangehenden Ansprüche, wobei die Partikel in dem granularen Feststoff (105) eine maximale Größe von einem halben Durchmesser einer Austrittsdüse (107) in dem Druckkopf (101) aufweisen.

4. Verfahren nach einem der vorangehenden Ansprüche, wobei der granulare Feststoff (105) in einer Druckflüssigkeit angeordnet ist.

5. Verfahren nach einem der vorangehenden Ansprüche, wobei eine Austrittsdüse (107) des Druckkopfes (101) verschlossen wird, während die Flüssigkeit (103) in dem Druckkopf (101) in Schwingungen versetzt wird.

6. Verfahren nach Anspruch 5, wobei die Austrittsdüse verschlossen wird, indem der Druckkopf (101) vor eine Verschlusseinrichtung (109) verfahren wird.

7. Verfahren nach einem der vorangehenden Ansprüche, wobei die Flüssigkeit (103) durch ein Piezoelement (111) im Druckkopf (101), durch Einkoppeln von Ultraschallwellen und/oder durch eine Schwingankerpumpe in Schwingungen versetzt wird.

8. Verfahren nach einem der vorangehenden Ansprüche, wobei die Flüssigkeit (103) mit ihrer Eigenfrequenz im Druckkopf (101) in Schwingungen versetzt wird.

9. Verfahren nach einem der vorangehenden Ansprüche, wobei die Flüssigkeit (103) mit einer Frequenz zwischen 100 Hz und 150 kHz in Schwingungen versetzt wird.

10. Verfahren nach einem der vorangehenden Ansprüche, wobei die Flüssigkeit über einen vorgegebenen Zeitraum in Schwingungen versetzt wird.

11. 3D-Drucker (100) mit einem Druckkopf (101), mit:
- einer Zuführeinrichtung (113) zum Zuführen einer Flüssigkeit (103), die einen granularen Feststoff (105) umfasst, zu dem Druckkopf (101); und
- einer Schwingungserzeugungsvorrichtung (115) zum Versetzen der Flüssigkeit (103) in dem Druckkopf (101) in Schwingungen.

12. 3D-Drucker (100) nach Anspruch 11, wobei der 3D-Drucker (100) eine Verschlusseinrichtung (109) zum Verschließen einer Austrittsdüse (107) umfasst, während die Flüssigkeit (103) in dem Druckkopf (101) in Schwingungen versetzt wird.

13. 3D-Drucker (100) nach Anspruch 11 oder 12, wobei die Verschlusseinrichtung (109) durch eine Verschlussplatte gebildet ist.

14. 3D-Drucker (100) nach einem der Ansprüche 11 bis 13, wobei der 3D-Drucker (109) ein Piezoelement (111) im Druckkopf, ein Einkopplungselement zum Einkoppeln von Ultraschallwellen und/oder eine Schwingankerpumpe umfasst, um die Flüssigkeit (103) in dem Druckkopf (101) in Schwingungen zu versetzen.

15. 3D-Drucker (100) nach einem der Ansprüche 11 bis 14, wobei der 3D-Drucker (100) eine Zeitschaltvorrichtung (117) zum Aktivieren der Schwingungserzeugungsvorrichtung (115) zu einer vorgegebenen Uhrzeit und/oder für eine vorgegebene Dauer umfasst.
